# EUROPEAN PATENT APPLICATION

(11) **EP 3 154 063 A1**
(43) Date of publication of application: **12.04.2017**
(21) Application number: 15466019.5
(22) Date of filing: 15.12.2015
(51) Int. Cl.: G21F 5/14, G21F 9/34, B60K 7/00

(54) **STORAGE ROBOTIC VEHICLE AND STORAGE FOR DISPOSAL SITE OF SPENT NUCLEAR FUEL CONTAINING THE STORAGE ROBOTIC VEHICLE**

(30) Priority: 09.10.2015 CZ 20150709
(71) Applicant: Robotsystem, s.r.o., 702 00 Ostrava-Moravská Ostrava (CZ); Haladova, Petra, 73937 Horni Bludovice (CZ)
(72) Inventor: HALADA, Pavel, 736 01 Havírov-Mesto (CZ); POLÁK, Daniel, 713 00 Ostrava-Hermanice (CZ); SVOBODA, Tomás, 742 82 okr. Nový Jicín (CZ)

(57) **Abstract**

The technology and logistics system (1) of robotic deep geological disposal of spent nuclear fuel consists of a surface complex (2), underground complex (9), and connecting shaft and elevator complex (11), where the surface complex (2) includes a robotic system of preparation of disposal casks (3) ended by storage (4) of deposit casks, and it is an entrance building for deep geological disposal of disposal casks (3). A storage (5) of bentonite fillings builds on the storage (4) of deposit casks, while the surface complex (2) under the surface of the underground complex (9) is followed by the directed connecting shaft and elevator complex (11) formed by a vertical shaft (12) and an elevator (7) with an elevator cabin (8) with built-in follow-up rails ended by a lower station (13) from which a network of access horizontal corridors (14) is bulit as approaches in geological repositories (6) followed by a system of circular boreholes (15) for storage of disposal casks (3), where the corridors (14) are equipped with a grid of rails (10) with contact wires. The grid of rails (10) with contact wiresis in the underground complex (9) and surface complex (2) is followed by short sections of rails with contact wires in the elevator cabin (8). A part of the surface complex (2) are in addition to storage (4) of disposal casks and storage (5) of bentonite fillings other surface robotic workstations (16), while in the storage (5) there are stored circular bentonite plugs (17), bentonite beds (18) and circular bentonite segments (19), and there is stored also a manipulator (21) of bentonite fillings for loading of the bentonite elements (17, 18, 19) on transport vehicles (20), and further in the storage (4) of disposal casks there is stored a manipulator (22) of disposal casks (3) for their storage in bentonite bed (18) loaded on transport vehicle (20) with a superstructure (24).

A storage robotic vehicle (30) is designated for loading of disposal cask (3) or bentonite filling of different type and their displacement from the connecting horizontal corridor (14) to the storage location in the borehole (15).

## Description

### Techical field

The present invention relates to an advanced fully robotic system and storage logistics of disposal casks with spent nuclear fuel into the host rock - long horizontal bores of deep geological repository, and storage robotic vehicle designed to manipulate the disposal casks.

### Description of the prior art

The current project solutions use only partial robotic technology and different technological processes of disposal casks, compared to a fully robotic technology solution of disposal processes in the proposed project.

In the process of storage of disposal casks into horizontal bores, compression, robust, spatially and economically demanding robotic technology for final disposal of containers for insertion into bentonite concavity is used. Due to large scale of disposal casks, also bedding and rolling technology is less suitable. Vertical method of storing of disposal casks into vertical bores is technologically less challenging, but with the disadvantage of low usability of large-capacity mine and limited usability of storage bores - only one disposal package may be placed in one borehole.

None of these projects solves the storage processes of disposal casks through a complex fully robotic storage system, according to the project proposal, in sync with the overall logistics of the deep geological repository.

### Summary of the invention

Said disadvantages are solved by the system of robotic technology and logistics of deep geological disposal of spent nuclear fuel which principle is that it comprises surface complex, underground complex, and connecting shaft and elevator complex, wherein the surface complex includes a robotic system for the preparation of disposal casks closed by store of disposal casks, which is also the entrance building for the deep geological robotic storage of disposal casks;
while the store of disposal casks is operably linked with a store of bentonite fillings designated as a contact filler material between the disposal cask and the rock of circular borehole as a part of the deep geological repository;
wh ile on the surface complex, there continues the shaft and elevator complex directed below the surface to the deep geological complex formed by a vertical shaft ended with an elevator from the bottom station, where the elevator is equipped with a cabin which has rails with contact wires built inside; continuing the upper and lower grid of rails with contact wires in the terminal stations;
while in the bottom station, there is a basic network of access horizontal corridors built, as approaches into the deep geological repositories, where a system of perpendicular / rectangular bores for disposal casks builds on these horizontal corridor, where the corridors are fitted with grid of rails with contact wires, while short sections of rails with contact wires stored in the elevator cabin follow the grid of rails with contact wires in the underground complex and the surface complex;
while a part of the surface complex, in addition to storage of disposal casks and storage of bentonite fillings are other surface robotic workstations, while circular bentonite plugs, bentonite beds and circular bentonite segments are stored in the storage, where a manipulator of bentonite fillings for loading of circular bentonite plugs, bentonite beds and bentonite circulars segments on the transport vehicle is placed in the storage, and further a manipulator of disposal casks for loading on the bentonite bed loaded on an extension of the transport car is placed in the storage of disposal casks;
while at the outset of each circular bore, there is a bore shoulder built, forming a transition with a minimum gap between an upper extension with turntable of ramp vehicle and the circular bore.

Furthermore, it is advantageous when rail turntables are used in the intersection points.

Furthermore, it is advantageous when a cavern as technological background of the repository is a part of the underground complex.

Furthermore, it is advantageous when a siding for the ramp vehicle is a part of the underground complex.

Furthermore, it is advantageous when bores have circular profile.

Furthermore, it is advantageous when circular bentonite plugs, as well as circular bentonite segments are fitted with internal handling shoulder on one side.

Said disadvantages are solved further by a storage robotic vehicle designed to load disposal casks or bentonite fillings of a different type and their transport from the horizontal connecting corridor to the storage space in the borehole, which principle is in that it is composed of base part, arch frame, in which lower longitudinal girders there are moulded wheels with in-wheel drives stored;
while in the upper girder of the arch frame, there are vertical synchronizing motion screws with the same orientation and the same ascension overhung pivoted, firmly connected with gear wheels, interconnected by a flexible closed element into which a rotary drive is extended;
while on the synchronizing motion screws there is a plane frame suspended, with two longitudinal rows of eyes used to deposit two parallel circular rods of oscillating collets of the bentonite bed;
while there are hollow bars of swinging collets of disposal casks also pivotally placed on circular rods, while both of the systems are synchronized by two pairs of gear segments and driven by linear actuators attached always to the appropriate collet on the opposite side in the eye of the plane frame, while in the front face of the plane frame there is a axially restraint staffed pin which is also restrained in the front surface of the front oscillating collets of the bentonite bed;
while in the rear part of the arch frame there is a reel drum of power and control cable placed rotatably, while a safety hook is rigidly connected to it in the rear part of the arch fra me.

It is advantageous when the reel drum of power and control cable is ended by a connecting plug.

The proposed fully robotized storage technology is based on a unique principle of robotic monobloc, and is in full symbiosis with the proposed logistics system of storage processes. The proposed robotic transport and storage set is able to generalize several vastly different robotic processes in a single robotic system: distribution of disposal casks from a transport robot to a handling robot - installation of disposal casks by a handling robot into confined space of horizontal or inclined long borehole to the designated storage location - build up and displacement of the remaining space of the borehole with bentonite filling by a gripping and handling robot - and final closure of the borehole with bentonite plug by a gripping and handling robot.

Timelessness of the proposed robotic technology makes it possible that one electromobile robotic block can provide a comprehensive storage complex process of disposal casks with spent nuclear fuel to a horizontal or inclined deep borehole, thus storage of disposal casks in a space of the borehole, the process of their build up with bentonite blocks, the sealing process of the remaining space of the borehole, as well as repeating this cycle of gradual insertion of a series of individual disposal casks in the long deep borehole, with a final robotic operation of robotic closure of the borehole with a bentonite plug.

The proposed fully robotized technology system covers all logistic processes of a deep geological repository for transport, handling, storage, sealing and closure of disposal casks in the borehole of deep geological repository.

A part of the invention is a complex robotic technology system which provides logistics of all storage processes in deep geological repository.

Manipulation robotic system is designed to provide a comprehensive fully robotized process for manipulation, transport and storage of disposal casks in the host rock of deep geological repository from the interim storage facility of filled disposal casks, and storage of bentonite fillings, to storage space of deep geological borehole by means of the transport vehicles with automated operation, robotic vehicle with turntable, and multifunctional storage robot.

The cylindrical disposal cask deposited on the bentonite bed is transported by a tracked robotic transport vehicle and moved frontally to the storage and handling robot which exceeds the transport vehicle with the disposal cask, grabs the cylindrical disposal cask using the first robotic effector, simultaneously grips the bentonite bed using the second robotic effector, and retracts back into space to the bore head, where it rotates on the rail turntable so that the longitudinal axis of the storage robot and of the disposal cask was identical with the longitudinal axis of the storage borehole.

The storage robot with the disposal cask on bentonite bed then enters a circular storage borehole and by its effectors at a designated location releases the disposal cask and bentonite bed which then remain in the final storage position. Then, the handling and storage robot gradually fills the space between the disposal cask and the walls of the bore with bentonite fillings.

This process is then in case of the serially stored disposal casks repeated until the complete filling of the borehole with disposal casks; the borehole is then closed with bentonite plug by the storage and handling robot.

A part of the invention is a complex robotic technological system that ensures the logistics of storage processes in deep geological repository.

### Description of Drawings

The attached sheets show figures and legend.

The figure for annotation shows a general view of a surface complex, underground complex with underground storage, as well as elevator and shaft complex.

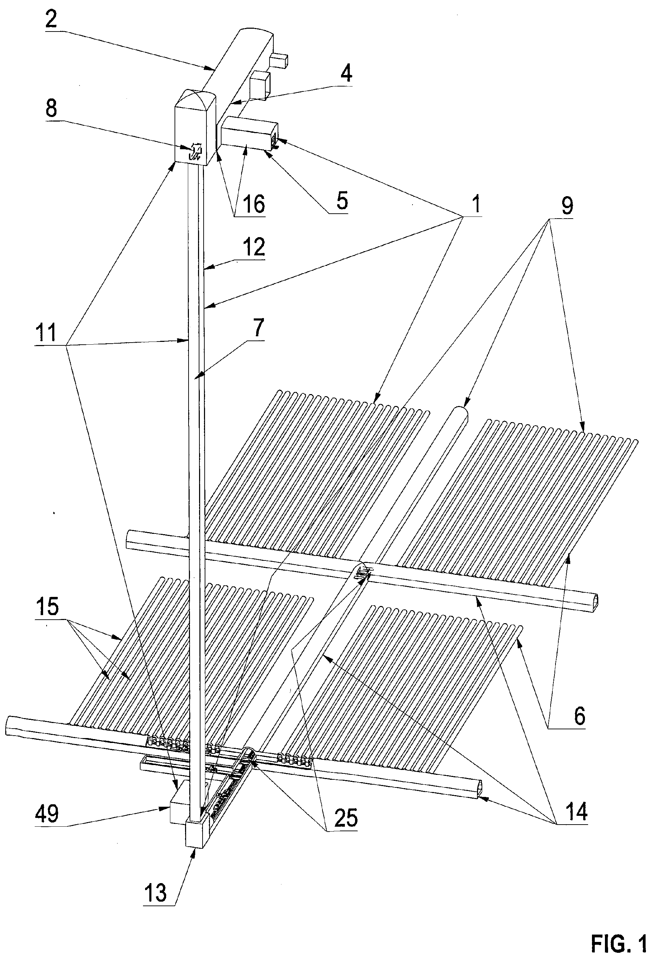

- FIG. 1: A general view of a surface complex, underground complex with underground storage, as well as elevator and shaft complex.

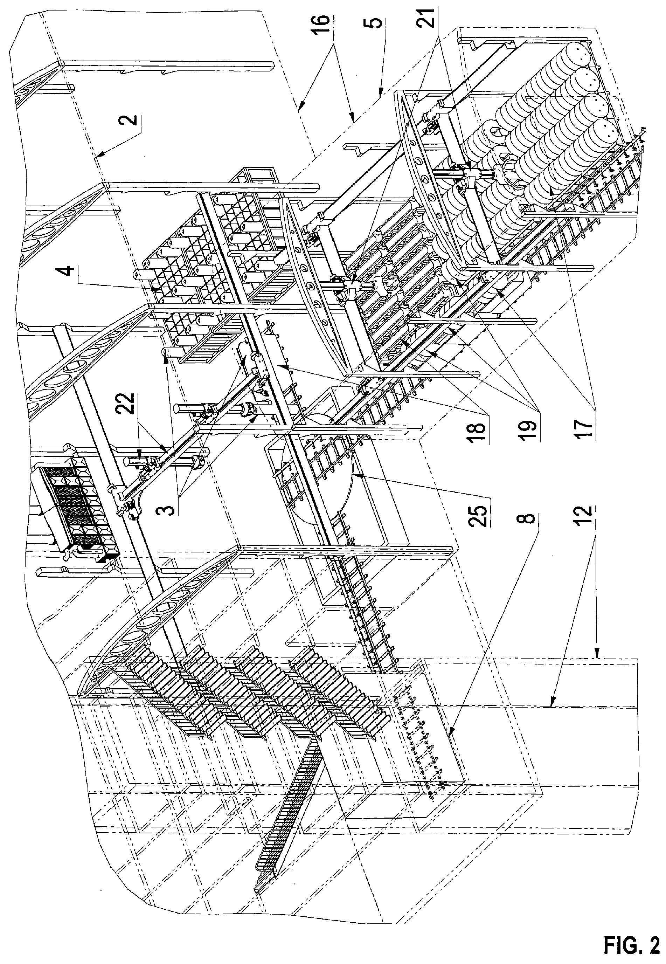

- FIG. 2: Detail drawing of a part of surface robotic workstation, particularly storage of bentonite fillings with manipulation system of their loading on transport vehicles, further storage of disposal casks with manipulation system of their loading on transport vehicles, surface grid of rails with contact wires including rail turntable designed for proper shifting of vehicles. Evident is connection of rails with wire contacts in elevator cabin located in the vertical shaft.

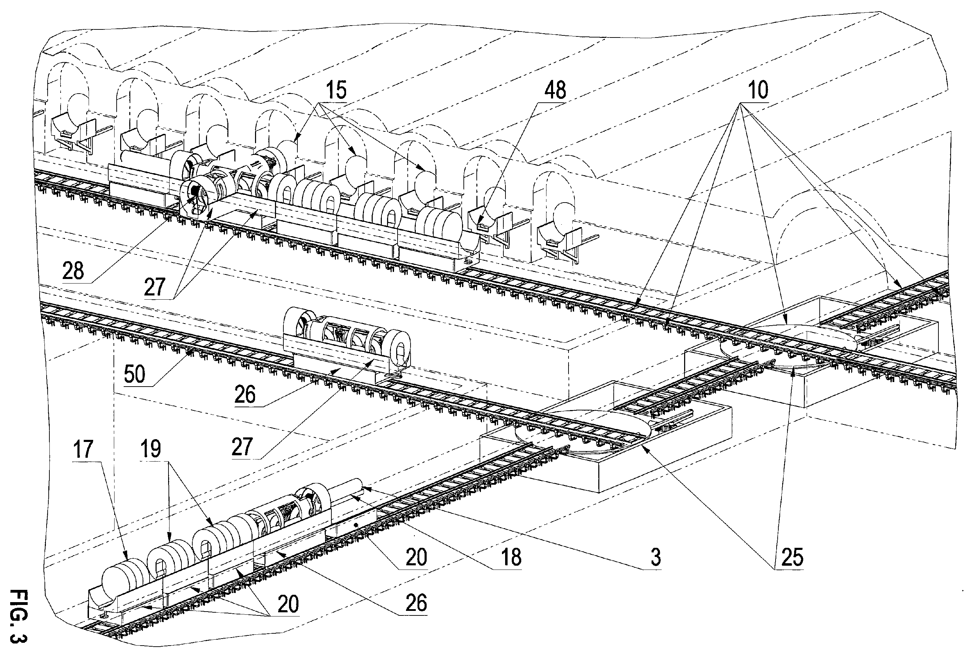

- FIG. 3: Deep geological repository part, particularly the grid of rails with contact wires including rail turntables allowing inclusion of a ramp vehicle to a set of vehicles. Further, there is shown a set of vehicles in front of the circular bore, when a ramp vehicles is shown in both positions of superstructure with turntable, which outlines a function of progressive landfill of the circular bore.

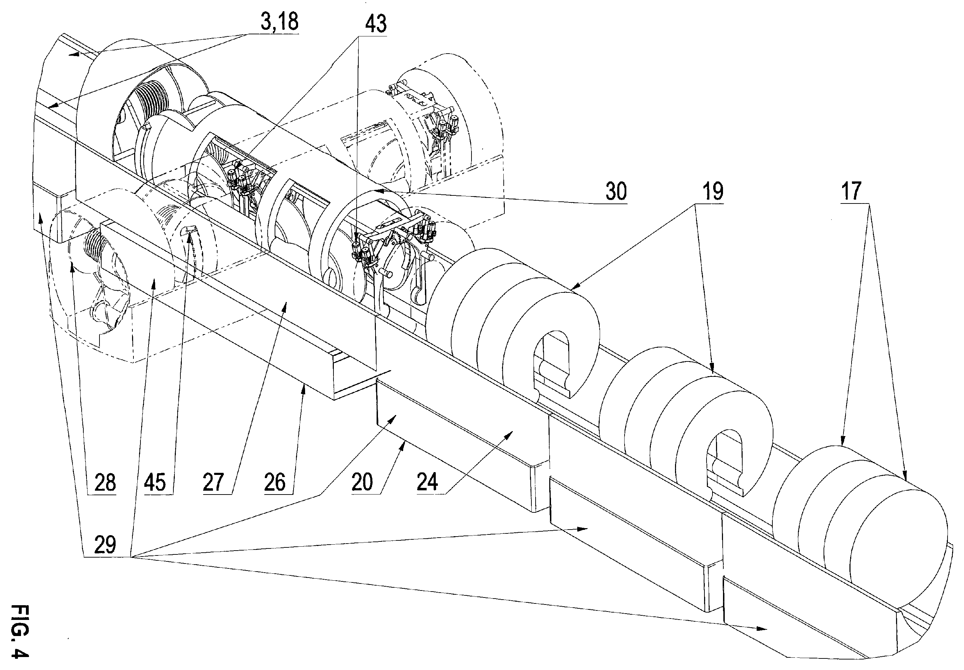

- FIG. 4: Detail drawing of set of vehicles comprising in sequential order three transporting vehicles when the first in order there are circular bentonite plugs, the second and the third in order there are circular bentonite segment, the fourth in the order there ramp vehicle with superstructure and turntable, on which a storage robotic vehicle is placed. On last, fifth vehicle there is a bentonite bed stored, on which a disposal cask is placed. Evident is also a safety winch for the possibility of emergency pulling of the storage robotic vehicle from the circular borehole.

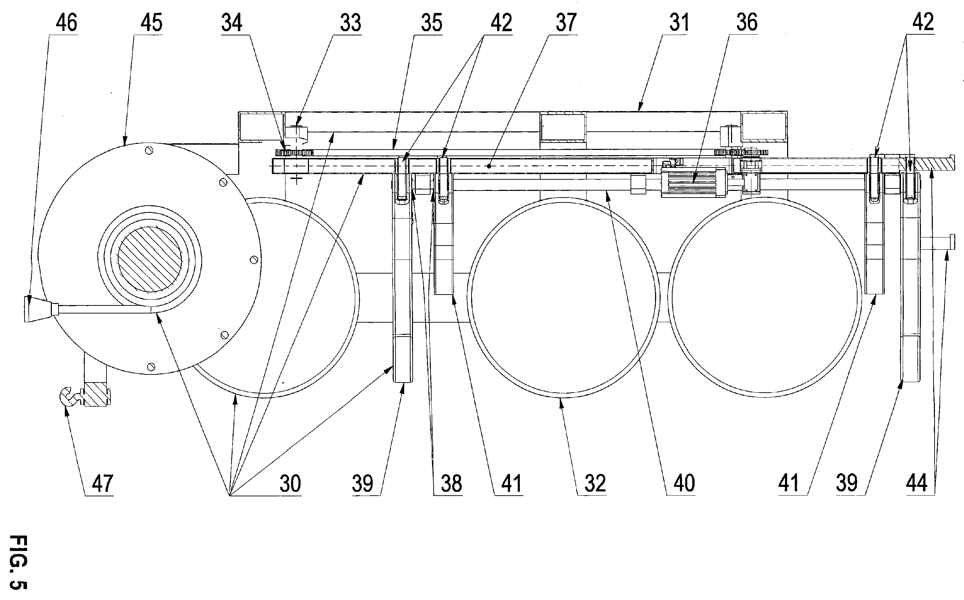

- FIG. 5: Cross-section of storage robotic vehicle where all the necessary mechanisms to ensure storage moves, including wheel drives inside them are evident. In the rear of the vehicle there is placed a winding drum of power and control cable with connecting plug and safety hook for emergency.pulling via rope winch.

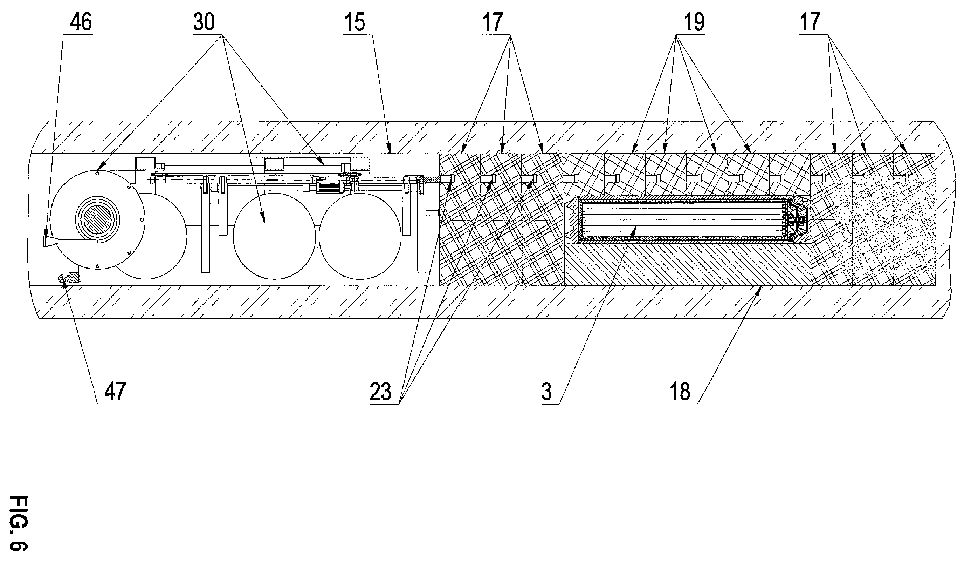

- FIG. 6: Storage system of bentonite fillings and disposal casks in the circular borehole. The system begins by an extraordinary storage of three bentonite plugs at first, then there is a repetitive storage cycle of bentonite bed, disposal cask, bentonite segments, and every storage of disposal cask is completed by sealing of the circular borehole with bentonite plugs. All is enabled by the storage robotic vehicle, shown in operation at the end of the circular borehole of the deep geological repository.

### An example of the invention version

Deep geological robotic storage of disposal casks is a complex, spatially extensive system of robotic technology and logistics of deep geological robotic disposal of waste consisting of spent nuclear fuel. Its beginning is an exit from a surface complex 2 of preparation of disposal casks 3 represented by a storage 4 of disposal casks and a storage of bentonite fillings 5 produced by molding. Transport of the material to a deep geological repository 6 is realized through an elevator 7 with a cabin 8, in which there are short tracks with contact wires placed in the floor following-up the surface complex 2, as well as the underground complex 9 on the top and bottom grid of rails 10 with contact wires. The elevator cabin 8 is placed in a shaft and elevator complex 11 which part is also a vertical shaft 12 finished by a bottom station 13.

Deep geological repository 6 as a part of the underground complex 9 consisting of a basic system of horizontal corridors 14 followed by rectangular circular cross-section screws 15 of required lengths at a certain height above the floor of the horizontal corridors 14.

Circular boreholes 15 representing the deep geological repository 6 serve as storage of disposal casks 6 which preparation, including their filling, takes place in a surface robotic workstation 16. Disposal casks 3 are stored in the circular boreholes 15 centrally, condition is storage of compressed bentonite segments of three types: a circular bentonite plug 17, a bentonite bed 18 and a circular bentonite segment 19.

These parts are loaded on transport vehicles 20 with manipulator 21 of bentonite fillings in the storage 5 and the transport vehicle 20 is loaded with the disposal casks 3 using the manipulator 22 of disposal casks after loading the bentonite bed 18. Circular bentonite plugs 17 and circular bentonite segments 19 have on one side always three holes with inner shoulder 23 serving to grasp.

Loaded parts are transported to the place by transport vehicles 20 with superstructures 24 proportional to circular diameter of the circular boreholes 15. Transport during the deep geological storage takes place in connecting grid of rails 10 with contact wires in the network of horizontal corridors 14 using rail turntables 25 used in all rail crossing in the horizontal corridors 14 and in the storage 4 of disposal casks. In addition to the transport vehicles, there is another type of vehicle, a ramp vehicle 26 which includes superstructure 27 with a turntable, which is essentially a superstructure 24 supplemented by the turntable with step of ±90° in the bottom. On the superstructure 27 with a turntable, there is a winch 28 placed. The ramp vehicle 26 is incorporated in a set of vehicles 29, where the first is the transport car 20 with load of bentonite bed 18 on which there is the disposal cask 3 placed, behind is the ramp vehicle 26 ordered, on which the storage robotic vehicle 30 stands, and further there are other transport vehicles 20 incorporated gradually within the set 29 of vehicles, while the first two are loaded with bentonite circular segments 19, and the last transport vehicle 20 of the set 29 of vehicles is loaded with circular bentonite plugs 17.

Storage robotic vehicle 30 is composed of base part, arch of the frame 31 in which lower longitudinal girders there are moulded wheels with in-wheel drives 32 fleetingly stored. In the upper girder of the arch frame, there are vertical synchronizing motion screws 33, with the same orientation and the same pitch, fleetingly rotationally stored, firmly connected with gear wheels 34, interconnected by a flexible closed element 35, into which a rotary drive 36 extends.

On the vertical synchronizing motion screws 33, there is a plane frame 37 suspended with two longitudinal rows of eyes used to store two parallel round bars 38 of swinging collets of the bentonite bed 39. On round bars 38, there are additionally hollow bars 40 of swivel collets 41 of the deposit casks hanged pivotally. Both systems are synchronized by two pairs of gear segments 42 and driven by linear actuators 43 attached on the appropriate collet and in the eye of the plane frame 37 on the opposite side

In the front face of the plane frame, a staffed pin 44 is inserted. Staffed pin 44 is also inserted in the front surface of front swivel collets of the bentonite bed 39.

In the rear part of the arc frame 31, winding drum of power and control cable 45 is placed, ended with connecting plug 46. Further, the safety hook 47 is fixedly connected with it in the rear part of the arc frame 31.

At the beginning of each circular bore 15, a bore shoulder 48 is built in, creating transition with minimal gap between the rotary superstructure with a turntable 27 and circular borehole 15. A cavern with several rooms as technological background 49 of the deep geological repository 6 and a stabling siding 50 for the ramp vehicle 26 is a part of the underground complex 9.

### Functions

Deep geological robotic storage of disposal casks is a part of a complex, spatially extensive system of nuclear fuel disposal. The technology and logistics system 1 of robotic deep geological disposal of spent nuclear fuel or deep geological robotic storage of disposal casks 3 can be divided into a surface complex 2, underground complex 9, and connecting shaft and elevator complex 11. The surface complex 2 includes a robotic system for the preparation of disposal casks ended by storage 4 of deposit casks, which is the outset of the system 1 of robotic deep geological disposal of disposal casks. Next to the storage of deposit casks 4, there is storage 5 of bentonite fillings placed, which serve as a contact filler material between the disposal cask 3 and grown rock of the circular bore 15 as a part of the deep geological repository 6. A network of horizontal access corridors 14, including the grid of rails 10 with contact wires which use rail turntables 25 at the intersections of rails, is built in the deep geological repository 6 from the bottom station 13 of the elevator 7 that is located in a vertical shaft 12. Short sections of rails with contact wires stored in the elevator cabin 8 follow the grid of rails 10 with contact wires in the underground complex 9, as well as the surface complex 2, so that no barriers rise during loading or unloading from the elevator cabin 8, and everything can be done automatically, unattended.

Part of the surface complex 2 are surface robotic workstations 16 in which it is possible to include the storage 4 of disposal casks and 5 storage of bentonite fillings, where circular bentonite plugs 17, bentonite beds and circular bentonite segments 19 are stored. The bentonite fillings are designed to fit the space between the centrally stored disposal cask 3 and the circular bore 15 made in grown rock, and therefore the fillings are loaded on superstructures 24 of transport vehicles 20 in a certain order corresponding to the storage in a circular borehole 15 while circular bentonite plugs 17 are loaded with the correct orientation on one transport vehicle 20 by a manipulator 22 of disposal casks, and circular bentonite segments 19 on another two transport vehicles 20. Bentonite bed 18 is loaded by a manipulator 21 of bentonite fillings on the last transport vehicle 20, and disposal cask 3 is loaded on it by a manipulator 22 of disposal casks.

Loaded transport vehicles 20 in the grid of rails 10 with contact wires are placed in the order required for storage using rail turntable 25, and after moving into the elevator cabin 8 they are gradually transported to the lower station 13 on the level of the underground complex 9, they are drawn out from the elevator cabin 8, and subsequently the ramp vehicle 26 is placed behind the transport vehicle 20 with bentonite bed 18 and disposal cask 3 on the rail turntable 25 thereby forming a set of vehicles 29.

While the ramp vehicle 26 is located on the stabling siding 50. The ramp vehicle 26 includes a superstructure 27 with a turntable which is an extension 24 supplemented by a turntable in the bottom and by a driven winch 28 at the end part. The superstructure 27 with turntable is intended for operations connected with handling and transport of bentonite fillings therefore its profile of the superstructure consists of a running surface of the same diameter as the circular bore 15. A storage robotic vehicle 30 is placed on the superstructure 27 with turntable of the ramp vehicle 26. The storage robotic vehicle 30 is designed to load disposal cask 3 or bentonite filling of various types, their displacement from the connecting horizontal corridor 14 to the storage space in the circular borehole 15.

According to this profile, running moulded wheels with in-wheel drives 32 are adapted, suspended fleetingly in the lower girders of the main arc frame. In the upper central arch frame 31, synchronizing motion screws 33 of the same pitch are rotationally stored to which there are firmly fixed gear wheels 34 which are for achieving the synchronization effect tied to each other by a flexible closed element 35 controlled by a rotary drive 36 tightly connected with the arc frame 31. On the synchronizing motion screws 33, there is suspended a plane frame 37 in which lower part there are hanging eyes for two, respectively three grasping systems stored. The first systems are swinging gripping collets of bentonite bed 39 firmly mounted on two parallel round bars 42 and driven by linear actuators 43 pivotally; the linear actuators 43 are stored pivotally in the plane frame 34 on the opposite side. For the second gripping system, gripping of the disposal cask 3, on the round bars 38 there are placed pivotally the hollow bars 40 which include swinging collets 41 of disposal cask. Both of the two systems are synchronized by two pairs of gear segments 42. The third system is gripping o bentonite filling units through three staffed pins 44, one of which is a part of the front of the plane frame 37, and the other two are part of the front oscillating collets 39 of bentonite bed

Loading of the circular bentonite plug 17 and circular bentonite segment 19 then will look so that after getting out of the circular borehole on the ramp vehicle, the storage robotic vehicle 30 turns 90° by rotating the superstructure 27 with turntable, exiting towards a pre-arranged fillings; and the staffed pins 44 of the storage robotic vehicle 30 are moved into holes with internal shoulder 23 of respective bentonite filling; swinging collets 39 of bentonite bed are opened up thereby to stabilize the grip. The robotic storage vehicle 30 then moves to the starting position of the ramp vehicle 26; rotation to the starting position occurs using the superstructure 27 with turntable; and the vehicle is ready to move to a circular borehole 15.

First it is approached to the borehole gradually with individual circular bentonite plugs 17 which form the distance between disposal casks 3 in the horizontal direction. After applying the necessary number of such plugs 17, it is necessary to apply the bentonite bed 18 with disposal cask 3 placed on it, thereby the disposal cask 3 is separated from the walls of the circular borehole 15 vertically downwards. Loading of the storage robotic vehicle 30 by the whole is done its re-approaching on the superstructure 27 with turntable of the ramp vehicle 36 where it comes to its rotation in the opposite direction by an angle of 90°, drawing by gripping by swinging collets of bentonite bed 39 additionally. The storage robotic vehicle 30 returns on the ramp vehicle 26, is rotated and ready to retract into a circular borehole 15.

Separation of disposal cask 3 from the rock of circular borehole 15 in the remaining directions is done by circular bentonite segments 19, while this operation is being performed by analogy with inserting of the circular bentonite plugs 17.

In all movements of the storage robotic vehicle 30 in the circular borehole 15, the vehicle is connected electrically by power and low voltage using winding drum of power and control cable 45 placed at the end of the storage robotic vehicle 30 and the cable is ended with connecting plug 46, for easy connection to a socket located on the superstructure 27 with a turntable of the ramp vehicle 26. On the arc frame 31 of the storage robotic vehicle 30, there is placed a safety hook 47 which is constantly connected to a winch 28 mounted on the superstructure 27 with a turntable of the ramp vehicle 26 for a case of accident.

For easy passage of the storage robotic vehicle 30 from the ramp vehicle 26 through the gap into the circular bore 15, a bore shoulder 48 is firmly placed in each entry of the circular bore 15.

The first set of circular bentonite plugs 17 at the end of the circular bore 15 must be fitted separately exceptionally, then the deposition cycle is performed so that disposal cask 3 is always closed by a circular bentonite plugs 17.

A part of the underground complex 9 is a cavern with technological facilities 49 serving the needs of exceptional emergency failure of automatic and robotic complex system.

### Industrial Use

The invention can be applied in the field of storage of hazardous waste, specifically for disposal of spent nuclear fuel.

### List of the positions used

- 1.: technology and logistics system of robotic deep geological disposal of spent nuclear fuel
- 2.: surface complex
- 3.: disposal cask
- 4.: storage of deposit casks
- 5.: storage of bentonite fillings
- 6.: deep geological repository
- 7.: elevator
- 8.: elevator cabin
- 9.: underground complex
- 10.: grid of rails with contact wires
- 11.: shaft and elevator complex
- 12.: vertical shaft
- 13.: bottom station
- 14.: horizontal corridor
- 15.: circular bore
- 16.: surface robotic workstation
- 17.: circular bentonite plug
- 18.: bentonite bed
- 19.: circular bentonite segment
- 20.: transport vehicle
- 21.: manipulator of bentonite fillings
- 22.: manipulator of disposal casks
- 23.: hole with an internal shoulder
- 24.: extension
- 25.: rail turntable
- 26.: ramp vehicle
- 27.: extension with turntable
- 28.: winch
- 29.: set of vehicles
- 30.: storage robotic vehicle
- 31.: arch frame
- 32.: moulded wheels with in-wheel drives
- 33.: synchronizing motion screw
- 34.: gear wheel
- 35.: flexible closed element
- 36.: rotary drive
- 37.: plane frame
- 38.: round bar
- 39.: swivel collet of bentonite bed
- 40.: hollow rod
- 41.: swivel collet of disposal cask
- 42.: pair of gear segments
- 43.: linear actuator
- 44.: staffed pin
- 45.: winding drum of power and control cable
- 46.: connecting plug
- 47.: safety hook
- 48.: bore shoulder
- 49.: technological facilities
- 50.: stabling siding

## Claims

1. Storage robotic vehicle (30) designed to engage a disposal cask (3), or a bentonite filling of various types, their displacement from the connecting horizontal corridor (14) to the storage site of the bore, **characterized in that**
it comprises an arc frame (31) in which lower longitudinal girders there are moulded wheels (32) with in-wheel drives; while in the upper girder of the arch frame there are fleetingly rotationally stored the vertical synchronizing motion screws (33) with the same orientation and the same pitch, firmly connected with gear wheels (34), interconnected by a flexible closed element (35), into which a rotary drive (36) extends;
while on the vertical synchronizing motion screws (33), there is a plane frame (37) suspended with two longitudinal rows of eyes used to store two parallel round bars (38) of swinging collets of the bentonite bed (39);
while on the round bars (38), there are additionally hollow bars (40) of swivel collets (41) of the deposit casks hanged pivotally, where the gripping oscillating collets (39) of bentonite bed are pivotally arranged on the two parallel round bars (38) and driven by linear actuators (43), and on the opposite side there are the linear actuators (43) pivotally stored in the plane frame (37), thus forming the first system of gripping, while for the second system of gripping, i.e. gripping of the disposal cask (3), there are on the round bars (38) pivotally placed the hollow bars (40) which include the swivel collets (41) of disposal cask;
while both systems are synchronized by two pairs (42) of gear segments and driven by the linear actuators (43) attached always on the appropriate collet (41) on the opposite side in the eye of the plane frame (37);
while in the front of the plane frame (37), there is inserted a staffed pin (44) which is also inserted in the front surface of front oscillating collets (39) of bentonite bed;
while a winding drum (45) of power and control cable is arranged in the rear part of the arc frame (31);
while a safety hook (47) is connected with it in the rear part of the arc frame (31).

2. Storage robotic vehicle (30) according to claim 1 **characterized in that** the winding drum (45) of power and control cable is ended by a ceonnecting plug (46).

3. Disposal of spent nuclear fuel including the storage robotic vehicle (30) according to claim 1 **characterized in that**
it comprises a surface complex (2), underground complex (9), and connecting shaft and elevator complex (11), wherein the surface complex (2) includes a robotic system for the preparation of disposal casks (3) closed by a store (4) of disposal casks, which is also the entrance building for the deep geological robotic storage of disposal casks (3);
while the store (4) of disposal casks is operably linked with a store (5) of bentonite fillings designated as a contact filler material between the disposal cask (3) and the rock of circular borehole (15) as a part of the deep geological repository (6);
while on the surface complex (2), there continues the shaft and elevator complex (11) directed below the surface to the deep geological complex formed by a vertical shaft (12) ended with an elevator (7) ended by the bottom station (13), where the elevator (7) is equipped with a cabin (8) which has inside the rails with contact wires continuing on the upper and lower grid of rails (10) with contact wires in the terminal stations;
while in the bottom station (13), there is a basic network of access horizontal corridors (14) built, as approaches into the deep geological repositories (6), where a system of perpendicular / rectangular bores (15) for disposal casks (3) builds on these horizontal corridors (14), where the corridors (14) are fitted with grid of rails (10) with contact wires to move the robotic storage vehicle (30);
while short sections of rails (10) with contact wires stored in the cabin (8) of the elevator (7) follow the grid of rails (10) with contact wires in the underground complex (9) and the surface complex (2);
while a part of the surface complex (2), in addition to storage (4) of disposal casks and storage (5) of bentonite fillings are other surface robotic workstations (16); while circular bentonite plugs (17), bentonite beds (18) and circular bentonite segments (19) are stored in the storage (5) of bentonite fillings, where a manipulator (21) of bentonite fillings for loading of circular bentonite plugs (17), bentonite beds (18) and bentonite circulars segments (19) on the transport vehicles (20) is placed in the storage (5) of bentonite fillings, and further a manipulator (22) of disposal casks for loading of the disposal casks (3) on the bentonite bed loaded on an extension (24) of the transport car (20) is placed in the storage (4) of disposal casks;
while at the outset of each circular bore (15) there is a bore shoulder (48) built, forming a transition with a minimum gap between an upper extension with turntable (27) of ramp vehicle (26) and the circular bore (15).

4. Disposal of spent nuclear fuel according to claim 3 **characterized in that** the rail turntables (25) are used in the intersection points.

5. Disposal of spent nuclear fuel according to claim 3 **characterized in that** a cavern as technological background (49) of the repository is a part of the underground complex (9).

6. Disposal of spent nuclear fuel according to claim 3 **characterized in that** a siding (50) for the ramp vehicle (26) is a part of the underground complex (9).

7. Disposal of spent nuclear fuel according to claim 3 **characterized in that** the bores (15) have circular profile.

8. Disposal of spent nuclear fuel according to claim 3 **characterized in that** the circular bentonite plugs (17), as well as circular bentonite segments (19) are fitted with internal handling shoulder on one side.
